# EUROPEAN PATENT APPLICATION

(11) **EP 4 711 414 A1**
(43) Date of publication of application: **18.03.2026**
(21) Application number: 24803413.4
(22) Date of filing: 26.04.2024
(51) Int. Cl.: C08L 27/12, C08K 3/34, C09K 3/10

(54) **FLUORORUBBER COMPOSITION**

(30) Priority: 11.05.2023 JP 2023078647
(71) Applicant: NOK Corporation, Minato-ku Tokyo 105-8585 (JP)
(72) Inventor: ABE, Shunsuke, Fujisawa-shi, Kanagawa 251-0042 (JP)
(74) Representative: Kraus & Lederer PartGmbB
(86) International application number: PCT/JP2024/016452
(87) International publication number: WO 2024/232300

(57) **Abstract**

A fluororubber composition comprising 10 to 60 parts by weight of wollastonite with an aspect ratio of 7 to 15 and 2 to 20 parts by weight of diatomaceous earth based on 100 parts by weight of fluororubber with a hardness Hs of 75 to 85. The fluororubber composition can be suitably used as a vulcanization molding material of an oil seal for both forward and reverse rotation that can maintain good fluid sealing in both forward and reverse operation even under high operating environment temperatures (e.g., 100 to 200°C) and high rotational speeds (e.g., 8,000 to 15,000 rpm).

## Description

### TECHNICAL FIELD

The present invention relates to a fluororubber composition. More specifically, the present invention relates to a fluororubber composition that can be suitably used as a vulcanization molding material of an oil seal for both forward and reverse rotation.

### BACKGROUND ART

Oil seals are widely used as important machine parts in the field of vehicles, industrial machines, and the like. Of these, an oil seal for both rotation, which are intended to continuously seal fluid in the operation of normal and reverse rotation of various members, are used in a wide range of fields as, for example, member parts for pumps, vehicle differential gears, agricultural machines, railway vehicles, etc.

As vehicles become electric vehicles, the prime movers are shifting from engines to motors. When a motor is used as the prime mover, the rotation of the shaft changes depending on the direction in which the vehicle is traveling. Since conventional engine seals rotate in a fixed direction, if the rotation is reversed, the sealed oil may leak.

In order to avoid this defect, for example, Patent Document 1 proposes an oil seal comprising an oil seal lip attached to a first annular member to be fitted to one member and closely sliding with the other member, and a plurality of screw portions alternately provided in groups on an inclined surface of the oil seal lip on an opposite sealing side to be sealed, the screw portions having specific angles of inclination relative to the rotating directions of the other member during normal rotation and reverse rotation; wherein auxiliary screw portions having specific angles of inclination relative to the rotating direction and reverse rotating direction in which each screw portion is provided are provided to be paired with the respective screw portions. However, only with the structure in which such auxiliary screws are provided to be paired with the screw portions, when normal rotation and reverse rotation are repeated, some defects may occur in the condition of the sealing surface due to abrasion, and seal leakage may occur during reverse rotation.

As an approach from the material perspective, a rubber material compounded with wollastonite with an aspect ratio of 8 or more has been proposed (Patent Document 2). However, hybrid vehicles and electric vehicles use motors as their prime movers and thus have even higher frequency. As a result, the lubrication conditions between the rotating shaft and the oil seal become more severe, leading to problems such as leakage being more likely to occur when the vehicle rotates in the reverse direction after normal rotation. Further, in an environment where noise is generated when running, for example, in the case of a railway vehicle, the abnormal noise caused by the oil seal, which was not a concern, becomes a concern. The abnormal noise of the oil seal is considered to be caused by the deterioration of the lubrication conditions as the rotation speed increases.

Further, as a fluororubber composition that is excellent in durability, such as heat resistance and abrasion resistance, and that can also sufficiently satisfy lubricating oil resistance and sealing properties, a fluororubber composition comprising 3 to 60 parts by weight of at least one of diatomaceous earth, wollastonite, talc, graphite, mica, and carbon fibers, having an average particle size of 6 to 35 µm, based on 100 parts by weight of fluororubber made of a vinylidene fluoride-hexafluoropropylene-tetrafluoroethylene-ethylene-perfluoro(alkyl vinyl ether) pentacopolymer is proposed (Patent Document 3). However, sealing may not be sufficient when operating in both forward and reverse rotation under recent even harsher conditions.

### PRIOR ART DOCUMENT

### PATENT DOCUMENT

Patent Document 1 : JP-A-2006-125454
Patent Document 2 : JP-B-5294551
Patent Document 3 : JP-A-2016-14092

### OUTLINE OF THE INVENTION

### PROBLEM TO BE SOLVED BY THE INVENTION

An object of the present invention is to provide a fluororubber composition that can be suitably used as a vulcanization molding material of an oil seal for both forward and reverse rotation that can maintain good fluid sealing in both forward and reverse operation even under high operating environment temperatures (e.g., 100 to 200°C) and high rotational speeds (e.g., 8,000 to 15,000 rpm).

### MEANS FOR SOLVING THE PROBLEM

The above object of the present invention can be achieved by a fluororubber composition comprising 10 to 60 parts by weight of wollastonite with an aspect ratio of 7 to 15 and 2 to 20 parts by weight of diatomaceous earth based on 100 parts by weight of fluororubber with a hardness Hs of 75 to 85.

### EFFECT OF THE INVENTION

Since the fluororubber composition of the present invention, which is suitably used to form the sliding surface of an oil seal for both forward and reverse rotation, is compounded with wollastonite with an aspect ratio of 7 to 15 and 2 to 20 parts by weight of diatomaceous earth, its vulcanized molded article becomes resistant to deformation due to shape effects. That is, the suppression of the deformation of the oil seal sliding surface in the sliding direction significantly enables sealing and retention of fluid in both forward and reverse rotational directions, compared to materials that are not compounded with wollastonite or diatomaceous earth, or materials that are compounded with other shapes of fillers. This consequently leads to an excellent effect that can maintain good fluid sealing in both forward and reverse operation even under high operating environment temperatures (e.g., 100 to 200°C) and high rotational speeds (e.g., 8,000 to 15,000 rpm).

### EMBODIMENTS FOR CARRYING OUT THE INVENTION

As the fluororubber, one having a hardness Hs (according to JIS K6253: 1997 corresponding to ISO 7619-1) of 75 to 85 is used. Actually, commercial products, such as Viton A-500, DAIEL-G801, DAIEL-GBR-6002, Viton B-600, Viton GBL-600S, Viton GLT-600S produced by DuPont·Dow Elastomers Japan, can be used as they are. Fluororubber can be used for a long time even at a high operating environment temperature (e.g., 100 to 200°C). If fluororubber with a hardness Hs other than this range is used, seal leakage occurs when it is used as an oil seal for both forward and reverse rotation, which is not preferable.

As the wollastonite (CaO·SiO₂), one with an aspect ratio of 7 to 15, preferably 8 to 13, is used. Actually, commercial products, such as NYGLOS 4W, NYGLOS 8, and NYGLOS 12 produced by IMERYS, Tremin 939-600 produced by Quarzwerke, and WFA60, WFA70, and WFB5 produced by Nippon Talc Co., Ltd., can be used as they are. Such products surface treated with a silane coupling agent can also be used. If wollastonite with an aspect ratio less than this range is used, the desired sealing properties cannot be ensured. In contrast, if wollastonite with an aspect ratio greater than this range is used, molding processability deteriorates.

The wollastonite is used at a ratio of 10 to 60 parts by weight, preferably 20 to 40 parts by weight, based on 100 parts by weight of fluororubber. If the use ratio is less than this range, the desired effects, such as sealing properties at high speed rotation, cannot be obtained. In contrast, if the use ratio is greater than this range, molding processability deteriorates significantly.

As the diatomaceous earth, one having an average particle size (measured by a laser scattering method) of 4 to 16 µm is preferably used. Actually, commercial products, such as Radiolite F produced by Showa Chemical Industry Co., Ltd. and Silica #6B produced by Chuo Silika Co., Ltd., can be used as they are.

The diatomaceous earth is used at a ratio of 2 to 20 parts by weight, preferably 5 to 15 parts by weight, based on 100 parts by weight of fluororubber. If the use ratio is less than this range, the desired effects cannot be obtained because of noise generation etc. In contrast, if the use ratio is greater than this range, molding processability deteriorates significantly.

Patent Document 3 has proposed a fluororubber composition comprising 3 to 60 parts by weight of at least one of diatomaceous earth, wollastonite, talc, graphite, mica, and carbon fibers, having an average particle size of 6 to 35 µm based on 100 parts by weight of fluororubber made of a specific pentacopolymer; however, the Examples of Patent Document 3 merely disclose compositions using diatomaceous earth, wollastonite, talc, graphite, or carbon fibers alone. There is no teaching or suggestion of effects of the combined use of specific amounts of wollastonite and diatomaceous earth. When talc or graphite is used alone without using the wollastonite disclosed in this document together, for example, when a forward/reverse rotation test is performed, it is difficult to ensure oil seal performance, as shown in Comparative Examples 4 and 5 provided later.

Various compounding agents required for vulcanization, physical properties, and functionality are added to the fluororubber composition comprising the above essential components. For example, depending on the type of fluororubber used, a polyol-based, sulfur-based, or organic peroxide-based vulcanizing agent, a vulcanization aid, a reinforcing agent such as carbon black, a filler, an acid acceptor such as an oxide or hydroxide of a divalent metal or hydrotalcite, and other necessary compounding agents are compounded to form a fluororubber composition.

Such a fluororubber composition is prepared by any kneading means using an open roll, a kneader, or the like, and then vulcanized and molded into the sliding surface of an oil seal for both forward and reverse rotation by heat pressing at 160 to 200°C for 3 to 30 minutes and secondary vulcanization at 150 to 250°C for 0.5 to 24 hours as necessary.

### EXAMPLES

Next, the present invention will be described in detail with reference to Examples. The present invention, including its effects, is not limited to the Examples.

### Example 1

| | |
|---|---|
| Fluororubber (Viton A-500, produced by DuPont Dow Elastomers Japan) | 100 parts by weight |
| Wollastonite (NYGLOS 4W, produced by IMERYS; aspect ratio: 8) | 30 parts by weight |
| Diatomaceous earth (Silika #6B, produced by Chuo Silika Co., Ltd.; average particle diameter: 6.4 µm) | 10 parts by weight |
| N990 carbon black | 2 parts by weight |
| Magnesium oxide | 3 parts by weight |
| Ca(OH)₂ | 6 parts by weight |
| Bisphenol AF | 2 parts by weight |
| Phosphonium salt (Curative #20, produced by DuPont Elastomers Japan) | 0.7 parts by weight |

Each of the above components was kneaded with a closed kneader, and vulcanized and molded into a sheet with a thickness of 6 mm by performing primary vulcanization at 170°C for 15 minutes and secondary vulcanization at 200°C for 22 hours, and the normal state physical property (hardness Hs) was measured. Further, under the same vulcanization conditions, an oil seal with an inner diameter of 65 mm, an outer diameter of 80 mm, and a width of 8 mm was vulcanized and molded, and an oil seal sealing test and a noise test were carried out using this oil seal.

Normal state physical property (hardness Hs):
According to JIS K6253: 1997 corresponding to ISO 7619-1, the instant
hardness was measured using a type A durometer.

Oil seal sealing test: The oil seal was used to seal lubricating oil (AW-2, produced by JX Energy), and the following operation a) or b) was performed:
a) Forward rotation was performed for 24 hours at a temperature of 90°C and a rotation speed of 4,500 rpm (15 m/sec), followed by a 2 minute pause, and then reverse rotation at 2,700 rpm (9 m/sec) for 1 hour; or
b) Forward rotation was performed for 24 hours at a temperature of 140°C and a rotation speed of 15,000 rpm (51 m/sec), followed by a 2 minute pause, and then reverse rotation at 6,000 rpm (20 m/sec) for 1 hour. Then, oil leakage was visually checked immediately after the operation.
   No oil leakage was evaluated as ○, and the occurrence of oil leakage was evaluated as ×.

Noise test: The oil seal was used to seal lubricating oil (AW-2), and forward rotation was performed at a temperature of 120°C and a rotation speed of 15,000 rpm. The amount of oil was reduced to a position of 20 mm above the bottom end of the rotating shaft, and the presence of abnormal noise with poor lubrication condition was checked.
No abnormal noise was evaluated as ○, and the presence of abnormal noise was evaluated as ×.

### Example 2

In Example 1, the same amount (30 parts by weight) of NYGLOS 8, produced by IMERYS; aspect ratio: 13) was used as the wollastonite.

### Example 3

In Example 1, the amount of wollastonite was changed to 45 parts by weight.

### Example 4

In Example 1, the amount of wollastonite was changed to 15 parts by weight.

### Example 5

In Example 1, the amount of diatomaceous earth was changed to 6 parts by weight.

### Example 6

In Example 1, the amount of diatomaceous earth was changed to 2 parts by weight.

### Example 7

In Example 1, the amount of diatomaceous earth was changed to 14 parts by weight.

### Comparative Example 1

In Example 1, the amount of wollastonite was changed to 10 parts by weight, and the amount of diatomaceous earth was changed to 30 parts by weight, respectively.

### Comparative Example 2

In Example 1, the amount of wollastonite was changed to 5 parts by weight, and the amount of diatomaceous earth was changed to 20 parts by weight, respectively.

### Comparative Example 3

In Example 1, diatomaceous earth was not used.

### Comparative Example 4

In Example 2, diatomaceous earth was not used.

### Comparative Example 5

In Comparative Example 3, the same amount (30 parts by weight) of NYAD 400, produced by IMERYS; aspect ratio: 5) was used as the wollastonite.

### Comparative Example 6

In Comparative Example 3, 25 parts by weight of talc (talc H, produced by Asada Milling Co., Ltd.) was used in place of the wollastonite.

### Comparative Example 7

In Comparative Example 3, 25 parts by weight of graphite (C-1, produced by Nichiden Carbon Co.) was used in place of the wollastonite.

### Comparative Example 8

In Comparative Example 3, the amount of wollastonite was changed to 15 parts by weight.

### Comparative Example 9

In Comparative Example 3, when the amount of wollastonite was changed to 70 parts by weight, kneading was impossible.

Following table below shows the results obtained in the above Examples and Comparative Examples 1 to 8. As for the material determination, oil seals that satisfy the performance required for both forward and reverse rotation oil seal materials are evaluated as ○, and oil seals other than the above are evaluated as ×.

**Table**

| Measurement· evaluation item | Example | | | | | | | Comparative Example | | | | | | | |
|---|---|---|---|---|---|---|---|---|---|---|---|---|---|---|---|
| | 1 | 2 | 3 | 4 | 5 | 6 | 7 | 1 | 2 | 3 | 4 | 5 | 6 | 7 | 8 |
| Hardness Hs | 77 | 80 | 80 | 71 | 77 | 78 | 80 | 76 | 70 | 77 | 80 | 76 | 80 | 80 | 70 |
| Oil seal sealing test | | | | | | | | | | | | | | | |
| a) | ○ | ○ | ○ | ○ | ○ | ○ | ○ | | × | ○ | ○ | × | × | × | |
| b) | ○ | ○ | ○ | × | | ○ | ○ | ○ × | × | ○ | | × | × | × | ○ × |
| Noise test | ○ | ○ | ○ | ○ | ○ | ○ | ○ | × | × | × | ○ × | × | × | × | × |
| Material determination | ○ | ○ | ○ | ○ | ○ | ○ | ○ | × | × | × | × | × | × | × | × |

These results reveal the following.
(1) Even when wollastonite and diatomaceous earth were used in combination, if these were used in amounts that deviated from the specified amount ranges, leakage was confirmed in the oil seal sealing test (forward/reverse rotation test), and noise occurred (Comparative Examples 1 and 2).
(2) In the material using wollastonite with an aspect ratio of less than 7, leakage was confirmed in the oil seal sealing test (forward/reverse rotation test) (Comparative Example 5).
(3) In the materials to which diatomaceous earth was not added in an amount of 2 parts by weight or more, noise occurred at a position of 20 mm above the bottom end of the shaft (Comparative Examples 3 to 8).

### INDUSTRIAL APPLICABILITY

The fluororubber composition of the present invention enables an oil seal obtained by vulcanization molding to maintain good fluid sealing in both forward and reverse operation, and thus can be suitably used as a vulcanization molding material of an oil seal for both forward and reverse rotation.

## Claims

1. A fluororubber composition comprising 10 to 60 parts by weight of wollastonite with an aspect ratio of 7 to 15 and 2 to 20 parts by weight of diatomaceous earth based on 100 parts by weight of fluororubber with a hardness Hs of 75 to 85.

2. The sealing material molded by vulcanizing of the fluororubber composition according to claim 1.

3. The sealing material according to claim 2, which is used as oil seal.

4. The sealing material according to claim 3, which is used as an oil seal for both forward and reverse rotation.
